# EUROPÄISCHE PATENTSCHRIFT

(11) **EP 3 718 822 B1**
(45) Veröffentlichungstag und Bekanntmachung des Hinweises auf die Patenterteilung: **01.09.2021**
(21) Anmeldenummer: 20020145.7
(22) Anmeldetag: 31.03.2020
(51) Int. Cl.: B60P 3/40

(54) **LASTAUFLAGE FÜR EIN SCHWERLAST-TRANSPORTFAHRZEUG, INSBESONDERE EINEN SCHWERLAST-TRANSPORTANHÄNGER, SOWIE EIN EINE DERARTIGE LASTAUFLAGE AUFWEISENDES SCHWERLAST-TRANSPORTFAHRZEUG**
LOAD SUPPORT FOR A HEAVY LOAD TRANSPORT VEHICLE, ESPECIALLY A HEAVY LOAD TRANSPORT VEHICLE, AND HEAVY LOAD TRANSPORT VEHICLE COMPRISING SUCH A LOAD SUPPORT
SUPPORT DE CHARGE POUR UN VÉHICULE DE TRANSPORT POUR CHARGES LOURDES, EN PARTICULIER UNE REMORQUE DE TRANSPORT POUR CHARGES LOURDES, AINSI QUE VÉHICULE DE TRANSPORT POUR CHARGES LOURDES COMPORTANT UN TEL SUPPORT DE CHARGE

(30) Priorität: 01.04.2019 DE 102019002332; 01.04.2019 DE 202019001481 U
(43) Veröffentlichungstag der Anmeldung: 07.10.2020
(73) Patentinhaber: Scheuerle Fahrzeugfabrik GmbH, 74629 Pfedelbach (DE)
(72) Erfinder: Gebert, Martin, 74629 Pfedelbach (DE); Hobusch, Mathias, 74629 Pfedelbach (DE)
(74) Vertreter: Leitner, Waldemar

(56) Entgegenhaltungen:
- DE-A1- 10 200 401
- DE-U1-202012 009 041

## Beschreibung

Die Erfindung betrifft eine Lastauflage für ein Schwerlast-Transportfahrzeug, welches ein auf einem Unterbau der Lastauflage angeordnetes Lastbett zur Aufnahme eines länglichen Objekts aufweist, sowie ein eine derartige Lastauflage verwendendes Schwerlast-Transportfahrzeug.

Ein derartiges Lastauflager sowie ein dieses Lastauflager verwendendes Schwerlast-Transportfahrzeug sind aus der DE 20 2012 009 041 U1 bekannt. Das in dieser Druckschrift beschriebene Schwerlast-Transportfahrzeug weist eine Lastauflage auf, die mit dem Fahrgestell des Schwerlast-Transportfahrzeugs durch vier Hydraulikzylinder verbunden ist, die in einer Fahrtrichtung des Fahrzeugs paarweise im Abstand hintereinander angeordnet sind. Alle Hydraulikzylinder weisen ein am Fahrgestellt montiertes Zylinderrohr und eine durch ein Schwenkgelenk mit der Lastauflage verbundene ein- und ausfahrbare Kolbenstange auf. Die Lastauflage ist hier durch ein synchrones Ausfahren der Kolbenstange aller Hydraulikzylinder in Bezug zum Fahrgestellt anhebbar, wobei ein Lastbett der Lastauflage seine parallele Ausrichtung beibehält, während sich andererseits durch synchrones Ausfahren der Kolbenstangen von zwei der vier Hydraulikzylinder, die bevorzugt in Fahrtrichtung nebeneinander angeordnet sind, ein Ende des Lastbettes in Bezug zum Fahrgestell und zum Untergrund anheben lässt, um dadurch die Last in eine in Fahrtrichtung des Transportfahrzeugs geneigte Stellung zu bringen, in der sich ein Ende der Last in einer größeren Höhe als das andere Ende befindet. Die bekannte Lastauflage erlaubt es daher, das zu transportierende längliche Objekt anzuheben und abzusenken. Sie besitzt jedoch den Nachteil, dass das längliche Objekt, abgesehen von der vorstehend beschriebenen Auf- und Absenkbewegung, starr im Schwerlast-Transportfahrzeug angeordnet ist. Dieses ist insbesondere dann nachteilig, wenn um die Längsachse des länglichen Objekts wirkende Torsionskräfte und/oder Torsionsmomente auftreten, welche zu unerwünschten, auf das Material des zu transportierenden Objekts einwirkenden Kräften und/oder Momenten führen.

Aus der EP 1 798 104 A2 ist ein Transportfahrzeug für den Transport eines großvolumigen Bauteils mit Überlänge bekannt, bei dem das zu transportierende Bauteil von einer Trägereinheit getragen wird, die ein schwenkbar mit der Trägereinheit verbundenes Auflagebett für das Bauteil umfasst. Zur Verbesserung der Manövrierfähigkeit des Fahrzeugs ist das Auflagebett durch ein Schwenkgelenk mit einer quer zur Fahrtrichtung verlaufenden Schwenkachse mit dem Fahrgestell verbunden und kann mittels einer Hubvorrichtung mit Hydraulikzylindern einseitig angehoben werden, um es zusammen mit dem Bauteil in Bezug zum Untergrund und zum Fahrgestell in eine in Fahrtrichtung geneigte Stellung zu schwenken. Weiter ist die gesamte Trägereinheit in Bezug zum Fahrgestell um die Fahrzeughochachse drehbar, so dass die Enden des Bauteils nach entgegengesetzten Seiten aus der Längsmittelebene des Fahrgestells heraus geschwenkt werden können. Nicht zuletzt kann vorgesehen sein, dass das Bauteil mittels einer zweiten Hubvorrichtung in vertikaler Richtung verfahrbar ist. Als nachteilig wird dabei jedoch angesehen, dass zum Verfahren des Bauteils in vertikaler Richtung eine weitere zusätzliche Hubvorrichtung erforderlich ist.

Aus der US 2011/0031292 A1 ist eine Lastauflage für ein Transportfahrzeug bekannt, die Teil einer Halterungsvorrichtung zum Befestigen eines Rotorblatts einer Windkraftanlage an einer Transportvorrichtung ist. Die Halterungsvorrichtung umfasst eine Festklemmvorrichtung zum Halten des Rotorblatts, ein Einschließsystem und ein Verbindungssystem, das dafür geeignet ist, demontierbar an der Transportvorrichtung des Fahrzeugs befestigt zu werden. Das Verbindungssystem verbindet hierbei die Festklemmvorrichtung und das Einschließsystem mit der Transportvorrichtung. Das Einschließsystem ist dazu eingerichtet, die Festklemmvorrichtung, also das Lastbett, in Bezug auf die Transportvorrichtung um eine erste Drehachse, um eine zweite Drehachse und um eine dritte Drehachse auszurichten, wobei die erste Drehachse, die zweite Drehachse und die dritte Drehachse verschiedene axiale Richtungen relativ zueinander aufweisen. Das Einschließsystem umfasst ein Eingriffselement, das sich entlang der ersten Drehachse erstreckt, wobei die Festklemmvorrichtung ein Langloch umfasst, in dem das Eingriffselement eingreift, wobei das Langloch eine gekrümmte Form aufweist, welche einen gekrümmten Bewegungsweg der Festklemmvorrichtung definiert, so dass die Festklemmvorrichtung dem durch die gekrümmte Form des Langlochs definierten Bewegungsweg folgt, wenn die Festklemmvorrichtung um die erste Drehachse gedreht wird.

Die DE 10 2012 211 877 A1 beschreibt eine Vorrichtung zum Handhaben eines Windenergieanlagenrotorblatts, der zumindest einen Grundkörper zum zumindest teilweisen Umfassen und Halten des Rotorblatts und zumindest einen Grundrahmen zur drehbaren Aufnahme des das Rotorblatt haltenden Grundkörpers besitzt. Der Grundkörper ist hierbei auf zumindest zwei Rollenlager drehbar gelagert und es sind Arbeitsmittel zum Drehen des Grundkörpers und/oder zum Längs- und/oder Querverfahren des Grundkörpers relativ zum Grundrahmen vorgesehen.

Es ist Aufgabe der vorliegenden Erfindung, eine Lastauflage für ein Schwerlast-Transportfahrzeug zu schaffen, welche es ermöglicht, die auf das längliche Objekt einwirkenden Torsionsmomente zu reduzieren. Außerdem soll ein Schwerlast-Transportfahrzeug geschaffen werden, welches sich durch eine weitgehend torsionsfreie Lagerung des zu transportierenden Objekts auszeichnet.

Die Aufgabe der Erfindung wird durch eine Lastauflage gemäß den Merkmalen des Anspruchs 1 gelöst.

Das erfindungsgemäße Schwerlast-Transportfahrzeug zeichnet sich dadurch aus, dass es die vorgenannte Lastauflage aufweist.

Durch die erfindungsgemäße Maßnahme wird in vorteilhafter Art und Weise eine Lastauflage sowie ein für deren Verwendung geeignetes Schwerlast-Transportfahrzeug geschaffen, welche sich dadurch auszeichnen, dass das zu transportierende längliche Objekt beim Auftreten von auf dieses einwirkenden Torsionskräften und/oder Torsionsmomenten eine Ausgleichsbewegung durchführen kann, da dass das längliche Objekt, welches direkt auf dem Lastbett der erfindungsgemäßen Lastauflage angeordnet oder mittels eines auf dem Lastbett angeordneten Adapters auf der Lastauflage gehalten ist, durch die erfindungsgemäßen Maßnahmen in Bezug auf das Chassis des Schwerlast-Transportfahrzeugs schwenkbar ist. Hierdurch wird in vorteilhafter Art und Weise dem Auftreten von auf die Struktur des zu transportierenden Objekts einwirkenden Torsionskräften und/oder Torsionsmomenten entgegen gewirkt.

Erfindungsgemäß ist vorgesehen, dass das Lastbett mindestens zwei in Längsrichtung der Lastauflage, also in Längsrichtung des zu transportierenden länglichen Objekt, verlaufende Lastträger aufweist, und dass an den Schmalseiten des Lastbetts jeweils eine Führungskulisse angeordnet ist, welche Führungsschlitze besitzt, in denen jeweils ein Längsträger des Lastbettes beweglich geführt ist, wobei die beiden Längsträger fest im Unterbau der erfindungsgemäßen Lastauflage angeordnet sind, so dass das Lastbett der Lastauflage um die in den Führungskulissen geführten, aber fest im Unterbau angeordneten Längsträger relativ zu dem Unterbau und somit zu dem die erfindungsgemäße Lastauflage tragenden Schwerlast-Transportfahrzeug eine vorzugsweise kreisförmige Schwenkbewegung durchführen kann. Liegt nun der Schwerpunkt des zu transportierenden länglichen Objekts in der Nähe des Mittelpunkts der Schwenkbewegung des Lastbettes, so besitzt dies den Vorteil, dass auch beim Auslenken des länglichen Objekts, also bei einem Auslenken des Lastbettes aus seiner Mittellage, der Gewichtsschwerpunkt des länglichen Objekts nichts verändert wird, sodass keine zusätzlichen Belastungen auf die Lastauflage und somit auf das Schwerlast-Transportfahrzeug auftreten.

Eine weitere vorteilhafte Weiterbildung der Erfindung sieht vor, dass die Lastauflage mindestens einen, vorzugsweise mehrere Zylinder aufweist, die sich vorzugsweise kreuzend zwischen den Lastträgern des Lastbettes und den im Unterbau fest angeordneten Längsträgern erstrecken. Diese Zylinder sind durch einen entsprechenden Hydraulikkreislauf verbunden. Wird der Hydraulikkreislauf gesperrt, sodass kein Hydraulikmedium zwischen den Zylindern strömen kann, wird in vorteilhafter Weise erreicht, dass das Lastbett der erfindungsgemäßen Lastauflage in einer definierten Position arretiert ist, sodass das längliche Objekt leicht auf das erfindungsgemäße Lastbett aufgelegt und/oder von diesem abgenommen werden kann. Wird diese Sperre der Zylinder aufgehoben, kann das erfindungsgemäße Lastbett eine freie Schwenkbewegung durchführen, sodass die Zylinder im Transportzustand vorzugsweise nicht druckbelastet sind. Werden ein oder mehrere Zylinder von dem unter Druck stehenden Hydraulikmedium beaufschlagt, so ist eine aktive Bewegung des erfindungsgemäßen Lastbettes möglich.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine schematische Darstellung eines Fahrzeug-Verbunds zum Transportieren eines länglichen Objekts, insbesondere einer selbsttragenden Last,
- Figur 2: ein Ausführungsbeispiel einer Vorrichtung zum Halten eines Endes des länglichen Objekts in einer abgesenkten Stellung,
- Figur 3: das Ausführungsbeispiel der Vorrichtung in einer angehobenen Stellung,

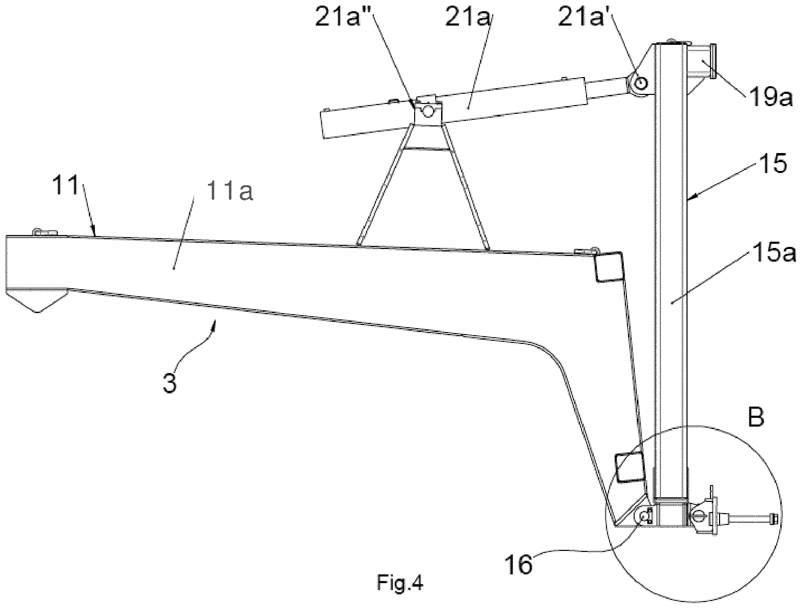

- Figur 4: eine Seitenansicht der Vorrichtung gemäß Figur 2,

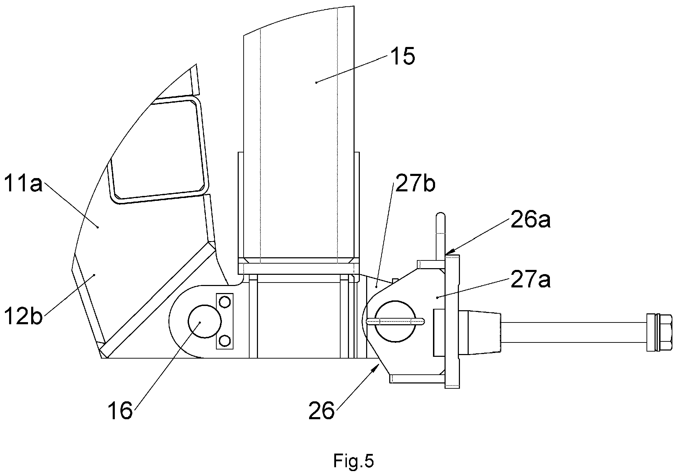

- Figur 5: ein Detail B der Figur 4
- Figur 6: ein Ausführungsbeispiel eines Adapters der Vorrichtung,
- Figur 7: ein Detail A der Figur 6.
- Figur 8: ein Ausführungsbeispiel eines nachlaufenden Fahrzeugs zusammen mit einem Klemmadapter für das zu transportierende längliche Objekt
- Figur 9: das Ausführungsbeispiel der Figur 8 ohne den vorgenannten Klemmadapter
- Figur 10: eine Heckansicht des Ausführungsbeispiels der Figur 8 zusammen mit einem Ausführungsbeispiel einer Lastauflage in ihrer Neutralposition
- Figur 11: das Ausführungsbeispiel der Figur 10 mit einer ausgelenkten Lastauflage
- Figur 12: eine dreidimensionale Darstellung des Ausführungsbeispiels der Lastauflage

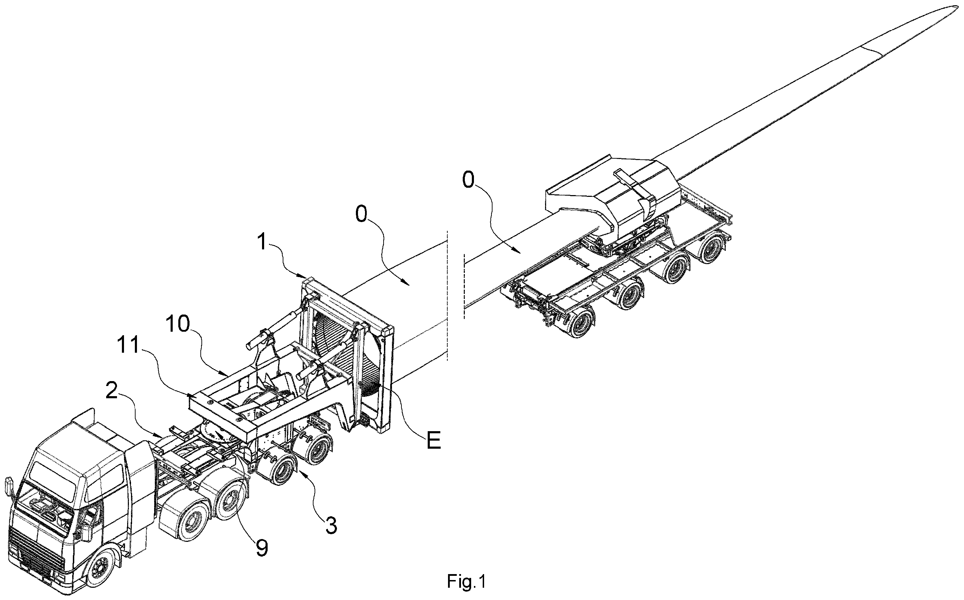

In Figur 1 ist ein allgemein mit 1 bezeichneter Fahrzeug-Verbund dargestellt, wie er weithin verbreitet zum Transport eines länglichen Objekts O, insbesondere einer selbsttragenden Last wie eines Mastabschnitts eines Rotorblatts einer Windturbine, verwendet wird. Der Fahrzeug-Verbund 1 weist ein an und für sich bekanntes und daher nicht mehr näher beschriebenes Zugfahrzeug 2 auf, an dem eine allgemein mit 10 bezeichnete Vorrichtung zum Halten eines Endes E des länglichen Objekts O, wie z. B. eines Rotorblatts oder eines Mastabschnitts einer Windturbine, befestigbar ist. Der Fahrzeug-Verbund 1 besitzt des Weiteren ein weiteres Fahrzeug 50, welches im hier beschriebenen Ausführungsbeispiel exemplarisch als nachlaufender Anhänger ausgebildet ist, auf dem das zu transportierende Objekt O aufliegt. Ein derartiger Fahrzeug-Verbund 1 ist bekannt und muss daher nicht mehr näher beschrieben werden.

Die Vorrichtung 10 kann unmittelbar am Zugfahrzeug 2 angebracht sein. Es ist aber auch möglich, dass diese - wie beim hier beschriebenen Ausführungsbeispiel - auf einem Zwischenwagen 3 angeordnet ist. Da es für das hier beschriebene Ausführungsbeispiel ohne Bedeutung ist, ob die Vorrichtung 10 direkt am Zugfahrzeug 2 oder auf einem Zwischenwagen 3 angeordnet ist, orientiert sich nachfolgende Beschreibung an dem in den Figuren dargestellten Fall.

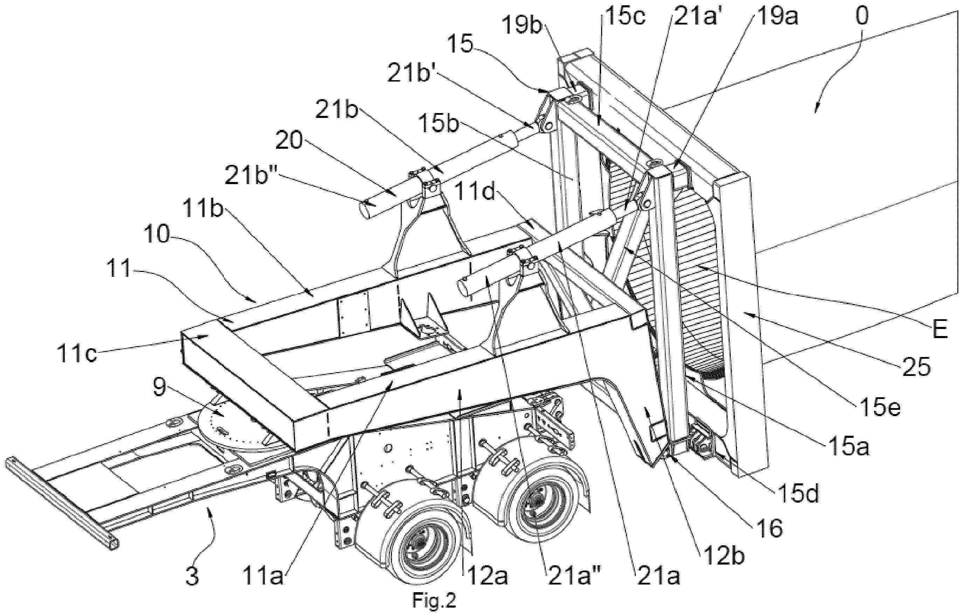

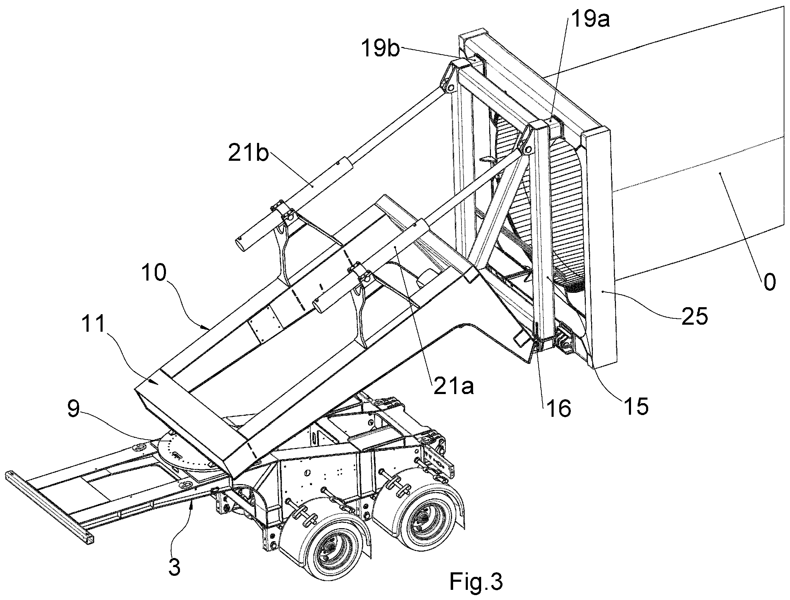

Die vorzugsweise über eine Drehanordnung 9 drehbar auf dem Zwischenwagen 3 angeordnete Vorrichtung 10 weist ein Grundgestell 11 auf, welches durch eine bekannte und daher nicht mehr näher beschriebene Betätigungseinrichtung anhebbar und absenkbar ist. Die Figur 2 zeigt die Vorrichtung 10 in ihrer abgesenkten und die Figur 3 in ihrer angehobenen Stellung. Das Grundgestell 11 weist zwei Längsträger 11a und 11b auf, welche durch Querträger 11c und 11d miteinander verbunden sind. Vorzugsweise ist jeder der beiden Längsträger 11a, 11b L-förmig ausgebildet und weist jeweils einen ersten Abschnitt 12a und einen hierzu geneigt verlaufenden zweiten Abschnitt 12b auf. Vorzugsweise ist vorgesehen, dass der Winkel zwischen den beiden Abschnitten 12a und 12b ein stumpfer Winkel einschließlich 90° ist.

An diesem Grundgestell 11 und insbesondere an den beiden Längsträgern 11a, 11b ist eine im hier beschriebenen Ausführungsbeispiel als Rahmen ausgebildete Halterung 15 vorgesehen, die über zwei Gelenke 16 schwenkbar angeordnet ist. Die Verwendung eines Rahmens zur Ausbildung der Halterung 15 wird zwar bevorzugt, ist aber nicht zwingend. Anstelle des Rahmens kann auch eine Platte oder eine ähnliche Konstruktion verwendet werden. Im folgendem soll aber dieses Ausführungsbeispiel anhand des in den Figuren dargestellten Rahmens beschrieben werden, die dazu gemachten Ausführungen gelten für die entsprechende Halterung 15 analog. Der Rahmen weist zwei Längsträger 15a und 15b und zwei diese beiden Längsträger 15a, 15b verbindende Querträger 15c, 15d auf. Vorzugsweise kann vorgesehen sein, dass zur Versteifung des Rahmens ein Stützträger 15e vorgesehen ist. Dem Fachmann ist aus der nachfolgenden Beschreibung ersichtlich, dass es für gewisse Anwendungsfälle durchaus ausreichend ist, wenn der Rahmen nur die beiden Längsträger 15a und 15b aufweist, die Querträger 15c und 15d sowie der Stützträger 15e sind zwar vorteilhaft, aber nicht zwingend.

Am Grundgestell 11 der Vorrichtung 10 ist eine Betätigungseinrichtung 20 vorgesehen, durch welche der Rahmen um die durch die beiden Gelenke 16 definierte Schwenkachse schwenkbar ist. Beim beschriebenen Ausführungsbeispiel weist die Betätigungseinrichtung 20 zwei Teleskopzylinder 21a, 21b, vorzugsweise Hydraulikzylinder, auf, die mit ihrem ersten Ende 21a' und 21b' am Rahmen angreifen und deren zweite Enden 21a" und 21b" am Grundgestell 11 der Vorrichtung 10 festgelegt sind. Durch eine Längenveränderung der Teleskopzylinder 21a, 21b ist somit die Halterung 15, hier also der Rahmen, um die Gelenke 16 relativ zum Grundgestell 11 schwenkbar. Das Grundgestell 11 der Vorrichtung 10 und somit der Rahmen kann durch eine an und für sich bekannte und daher in den Figuren nicht gezeigte Einrichtung angehoben und abgesenkt werden.

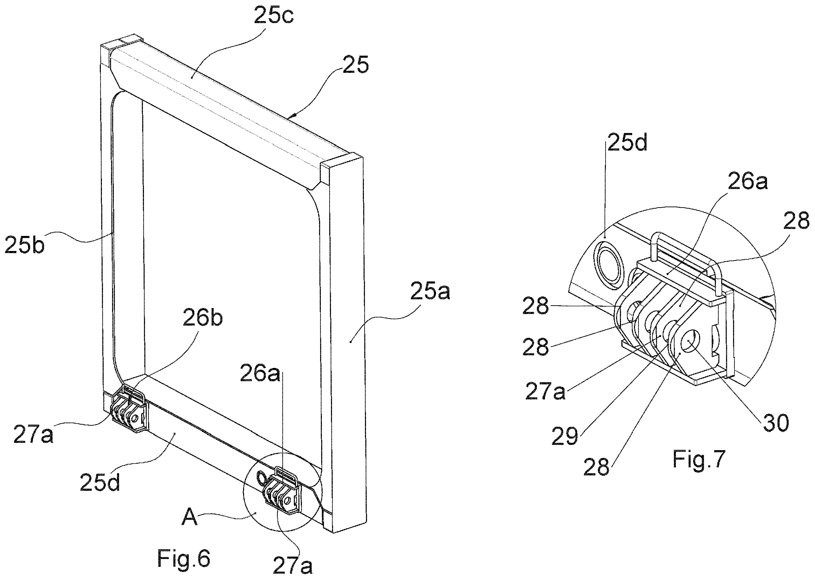

Am Rahmen der Vorrichtung 10 ist ein Adapter 25 - wie nachstehend beschrieben - verschiebbar und vorzugsweise verschwenkbar angeordnet. Dieser Adapter 25 ist in Figur 6 dargestellt und hier rahmenartig ausgebildet. Er weist Längsträger 25a und 25b sowie Querträger 25c und 25d auf. Der Adapter 25 ist derart ausgebildet, dass er am Ende E des länglichen Objekts O befestigbar ist. Die genaue Art und Weise der Befestigung des Adapters 25 am Ende E des länglichen Objekts O ist hier ohne Bedeutung. Im europäischen Patent EP 2 719 578 B1 der Anmelderin ist eine bevorzugte Ausgestaltung eines derartigen Adapters beschrieben.

Wie aus den vorgenannten Figuren ersichtlich ist, sind vorzugsweise der Adapter 25 und die Halterung 15, im hier gezeigten Ausführungsbeispiel also der Rahmen, in der Vorrichtung 1 durch eine Schwenkeinrichtung 26 miteinander verbunden, so dass der Adapter 25 relativ zum Rahmen um eine Schwenkachse beweglich ist. In dem gezeigten Fall weist die Schwenkeinrichtung 26 zwei Schwenkeinheiten 26a und 26b auf, wobei jede Schwenkeinheiten 26a, 26b zwei Schwenkelemente 27a und 27b besitzt. Im beschriebenen Ausführungsbeispiel sind im unteren Bereich des Adapters 25, hier am unteren Querträger 25d, die beiden Schwenkelemente 27a der Schwenkeinheiten 26a und 26b vorgesehen, welche mit den zu diesen komplementär ausgebildeten Schwenkelementen 27b der Schwenkeinheiten 26a und 26b zusammenwirken, welche am Rahmen angeordnet sind.

Bei einem länglichen Objekt O mit einer symmetrischen Gewichtsverteilung, bei dem also der Gewichtsschwerpunkt des länglichen Objekts O auf seiner Längsachse oder nur gering beabstandet von dieser liegt, ist der Adapter 25 an der Halterung 15 mittig angeordnet, um keine die Transportstabilität beeinflussenden Kippmomente um die Längsachse des Zwischenwagens 3 auftreten zu lassen. Die Längsachse des zu transportierenden Objekts O liegt also etwa in einer Mittelebene des Adapters 25 und somit der Vorrichtung 10. Dies ist oft ausreichend, um einen stabilen Transport des länglichen Objekts O zu ermöglichen.

Insbesondere bei einem Transport von länglichen Objekten O mit einem asymmetrischen Querschnitt, wie zum Beispiel einem Rotorblatt einer Windkraftanlage, liegt aber der Gewichtsschwerpunkt dieses länglichen Objekts O nicht auf seiner Längsachse, sondern seitlich versetzt zu dieser, also außermittig. Bei einem mittig angeordneten Adapter 25 würde die Vorrichtung 10 somit einseitig belastet werden, da der Gewichtsschwerpunkt des länglichen Objekts O nicht in ihrer Mittelebene liegt. Es können somit Kippmomente um die Längsrichtung der Vorrichtung 10 auftreten. Das hat dann zur Folge, dass hierdurch die Kippstabilität zumindest der Vorrichtung 10 und folglich auch diejenige des die Vorrichtung 10 tragenden Fahrzeugs, im beschriebenen Ausführungsbeispiel also die Kippstabilität des Zwischenwagens 3, vermindert ist.

Bei dem beschriebenen Ausführungsbeispiel der Vorrichtung 10 ist nun vorgesehen, dass der Adapter 25 nicht nur mittig, sondern auch außermittig an der Halterung 15, also hier am Rahmen, anordbar ist. Vorzugsweise ist hierzu vorgesehen, dass die Verbindung zwischen Adapter 25 und Halterung 15 so ausgestaltet ist, dass sie nicht nur eine mittige, sondern auch mindestens eine außermittige Anordnung des Adapters 25 an der Halterung 15 ermöglicht.

Bevorzugt wird hierzu, dass die den Adapter 25 und die Halterung 15 verbindende Schwenkeinrichtung 26 und somit die beiden Schwenkeinheiten 26a, 26b derart ausgestaltet sind, dass sie nicht nur vorzugsweise ein Schwenken des Adapters 25 um die durch die Schwenkeinrichtung 26 definierte Schwenkachse, sondern auch und insbesondere ein Versetzen des Adapters 25 in Richtung dieser Schwenkachse ermöglichen. Eine derartige Maßnahme besitzt den Vorteil, dass in einfacher Art und Weise die vorstehend angesprochene asymmetrische Anordnung des Adapters 25 auf der Halterung 15 ermöglicht wird, um damit eine in Bezug auf die Längsachse des länglichen Objekts O vorhandene asymmetrische Gewichtsverteilung auszugleichen, indem der das Objekt O tragende Adapter 25 ebenfalls außermittig angeordnet wird. Da nun der Adapter 25 versetzt zur Halterung 15 und somit zu der Mittelebene der Vorrichtung 10 angeordnet ist, also der Adapter 25 außermittig an der Halterung 15 montiert ist, kann in vorteilhafter Art und Weise erreicht werden, dass auch bei einem außerhalb der Längsachse des länglichen Objekts O liegenden Schwerpunkt das längliche Objekt O derart in der Vorrichtung 10 positioniert werden kann, dass sein Schwerpunkt in der Mitte der Vorrichtung 10 oder zumindest nahe zu dieser liegt. Hierdurch wird in vorteilhafter Art und Weise die Kippstabilität der Vorrichtung 10 und somit des Fahrzeug-Verbunds 1 und folglich dessen Transportsicherheit erhöht.

Am einfachsten ist eine derartige außermittige Anordnung des Adapters 25 zu erreichen, dass an der Halterung 15 und/oder am Adapter 25 eine Anzahl von unterschiedlichen Befestigungsmöglichkeiten für die Schwenkeinheiten 26a und/oder 26b vorgesehen sind, wie zum Beispiel eine Anzahl von in der Querrichtung der Halterung 15 und/oder des Adapters 25 verlaufende Bohrungen, welche eine außermittige Anordnung der beiden Schwenkeinheiten 26a, 26b erlauben. Eine derartige Ausgestaltung besitzt den Vorteil einer besonders einfachen Bauweise.

Bei dem beschriebenen Ausführungsbeispiel ist vorgesehen, dass die Schwenkeinrichtung 26 derart ausgebildet ist, dass der Adapter 25 an der Halterung 15 in unterschiedlichen Positionen mittig und außermittig und vorzugsweise schwenkbar befestigt werden kann, ohne dass es erforderlich ist, die Schwenkeinheiten 26a und/oder 26b hierzu von der Halterung 15 und/oder vom Adapter 25 zu lösen und in einer unterschiedlichen Position neu zu montieren.

Beim hier beschriebenen Ausführungsbeispiel wird dies dadurch erreicht, dass die den Adapter 25 und die Halterung 15 schwenkbar verbindenden Schwenkeinheiten 26a, 26b jeweils als Lamellen-Kupplungen ausgebildet sind, wie dies am besten aus den Figuren 6 und 7 ersichtlich ist. Die Figur 6 zeigt in einer isometrischen Darstellung die der Halterung 15 zugewandte Seite des Adapters 25 und die Figur 7 ein Detail A der Figur 6. Man erkennt aus diesen Figuren, dass die Schwenkelemente 27a der Schwenkeinheiten 26a, 26b Lamellen 28 aufweisen, zwischen denen jeweils ein Zwischenraum 29 vorhanden ist. Die Schwenkelemente 27b, welche am Rahmen angeordnet sind, weisen ebenfalls eine Lamelle oder mehrere durch Zwischenräume getrennte Lamellen auf. Durch ein Einschieben der Lamellen 28 der Schwenkelemente 27a in die Zwischenräume zwischen den Lamellen der Schwenkelemente 27b und durch ein Verriegeln der dann ineinandergreifenden Schwenkelemente 27a, 27b, zum Beispiel durch Einschieben eines Bolzens in die Öffnungen 30 der jeweiligen Schwenkeinheit 26a, 26b, wird die Schwenkverbindung 26 zwischen dem Rahmen und dem Adapter 25 ausgebildet.

Um nun eine zu einer mittigen Position versetzte Anordnung des Adapters 25 auf der Halterung 15 zu ermöglichen, ist beim beschriebenen Ausführungsbeispiel vorgesehen, dass mindestens eines der beiden Schwenkelemente 27a in mindestens zwei unterschiedlichen Positionen in das mit diesen zusammenwirkende Schwenkelement 27b eingesetzt werden kann, so dass hierdurch eine außermittige Anordnung des Adapters 25 auf der Halterung 15 erreichbar ist.

Es wird aber bevorzugt, dass es die beschriebene Schwenkeinrichtung 26 erlaubt, den Adapter 25 in mehr als einer außermittigen Position relativ zur Halterung 15 zu positionieren. Hierzu wird bevorzugt, dass die an dem Adapter 25 angeordneten Schwenkelemente 27a jeweils eine hinreichend große Zahl von jeweils durch einen Zwischenraum 29 getrennten Lamellen 28 aufweisen, in welche die entsprechenden Lamellen der zu diesen Schwenkelementen 27a komplementären Schwenkelemente 27b eingreifen können.

Beim beschriebenen Ausführungsbeispiel ist exemplarisch vorgesehen, dass - wie aus den Figuren 6 und 7 ersichtlich - die Schwenkelemente 27a jeweils vier Lamellen 28 besitzen. Nimmt man nun an, dass die Schwenkelemente 27b welche an der Halterung 15 angeordnet sind, jeweils zwei Lamellen besitzen, so werden dann vier unterschiedliche Positionen ausgebildet, in denen der Adapter 25 an der Halterung 15 befestigt werden kann. Dem Fachmann ist aus der vorstehenden Beschreibung ersichtlich, dass die hier aufgeführte Konstellation von vier Lamellen 28 an den Schwenkelementen 27a des Adapters 25 und zwei Lamellen an den Schwenkelementen 27b nur exemplarischen Charakter besitzt. Es können, je nach Anwendungsfall, mehr oder weniger durch Zwischenräume 29 getrennte Lamellen 28 der Schwenkelemente 27a und/oder mit diesen zusammenwirkende Lamellen der Schwenkelemente 27b vorgesehen sein, so dass - entsprechend der Anzahl der Lamellen 28 der Schwenkelemente 27a und der Lamellen der Schwenkelemente 27b - mindestens zwei, drei oder mehr als drei unterschiedliche Positionen, in denen der Adapter 25 versetzt angeordnet werden kann, ausgebildet werden.

Es ist auch möglich, die vorstehend genannte Ausgestaltung umzukehren, das heißt, dass die an der Halterung 15 angeordneten Schwenkelemente 27b eine größere Zahl von Lamellen aufweisen als die am Adapter 25 vorhandenen Lamellen 28. Es ist daher nicht zwingend, dass - wie beim hier beschriebenen Ausführungsbeispiel - an dem Adapter 25 mehr Lamellen 28 vorgesehen sind als an der Halterung 15. Es ist natürlich auch möglich, dass an der Halterung 15 zwei oder mehr Lamellen, die durch Zwischenräume getrennt sind, vorgesehen sind, und am Adapter 25 nur eine einzige Lamelle 28 oder zwei oder mehr durch Zwischenräume 29 getrennte Lamellen 28 vorgesehen sind. Es ist somit ausreichend, dass mindestens ein Schwenkelement 27a und/oder mindestens ein hierzu komplementäres Schwenkelement 27b mindestens zwei durch einen Zwischenraum getrennte Lamellen aufweist, so dass hierdurch der Adapter 25 an der Halterung 15 in mindestens zwei Positionen, von denen eine eine außermittige Position ist, anordbar ist.

Dem Fachmann ist aus der obigen Beschreibung auch ersichtlich, dass die hier dargestellte beschriebene Art und Weise, wie eine versetzte Anordnung des Adapters 25 an der Halterung 15 realisiert ist, nur einen exemplarischen Charakter besitzt. Vielmehr ist eine Vielzahl von derartigen Ausgestaltungen möglich. Es ist zwar nicht bevorzugt, aber möglich, dass auf die Schwenkbarkeit des Adapters 25 relativ zur Halterung 15 verzichtet wird. Wesentlich ist, dass der Adapter 25 außermittig an der Halterung 15 angeordnet werden kann.

Es ist auch möglich, dass vorgesehen ist, dass der Adapter 25 nicht, wie bei der vorstehend beschriebenen Ausgestaltung - in diskreten Abständen an der Halterung 15 in unterschiedlichen Positionen befestigbar ist. Vielmehr ist es auch möglich, eine kontinuierlich veränderbare außermittige Anordnungsmöglichkeit des Adapters 25 vorzusehen. Eine derartige kontinuierliche Anordnung der Schwenkelemente 27a, 27b ist z. B. dadurch möglich, indem zum Beispiel mindestens einer dieser Schwenkelemente auf einem verschiebbaren Schlitten gelagert ist.

Auch eine Kombination der vorgenannten Möglichkeiten, insbesondere unterschiedliche Befestigungspunkte an der Halterung 15 und/oder am Adapter 25 und gleichzeitig eine Ausgestaltung der Schwenkelemente 27a, 27b wie vorstehend beschrieben vorzusehen, ist möglich.

Wie am besten aus den Figuren 2 und 3 ersichtlich, weist die Halterung 15 an ihrer oberen, den Schwenkeinheiten 26a, 26b gegenüberliegenden Seite Anschlagelemente 19a und 19b auf, an denen sich der obere Teil des Adapters 25 abstützt. Diese Anschlagelemente 19a, 19b bilden somit ein Widerlager für den Adapter 25 aus. Eine derartige Konstruktion besitzt den Vorteil, dass auf den Adapter 25 nur Druckkräfte einwirken, er also nicht dafür ausgelegt sein muss, auch Zugkräfte aufzunehmen. Ein weiterer Vorteil einer derartigen Konstruktion, nämlich, dass die Halterung 15 mit dem Adapter 25 durch an der unteren Seite der Halterung 15 und folglich an der Unterseite des Adapters 25 angeordnete Schwenkeinheiten 26a, 26b verbunden ist, ist darin zu sehen, dass zum Koppeln vom Adapter 25 und Halterung 15 Montagearbeiten nur im unteren Bereich derselben vorgenommen werden müssen. Beachtet man nun, dass der typische Durchmesser von länglichen Objekten wie Rotorblättern einige Meter beträgt, so bringen die vorgenannten Maßnahmen den Vorteil mit sich, dass Montagearbeiten im oberen Bereich des das zu transportierenden Objekt O aufnehmenden Adapters 25 und/oder des Rahmens entfallen können, was die Arbeitssicherheit beträchtlich erhöht.

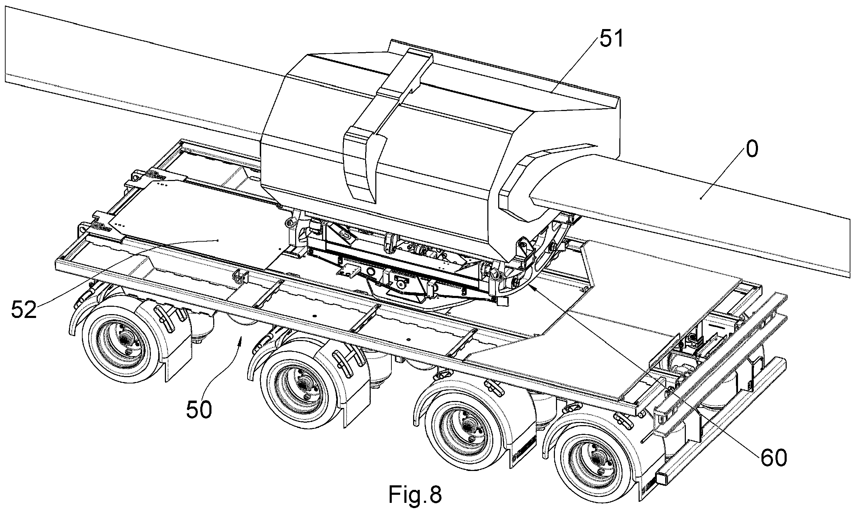

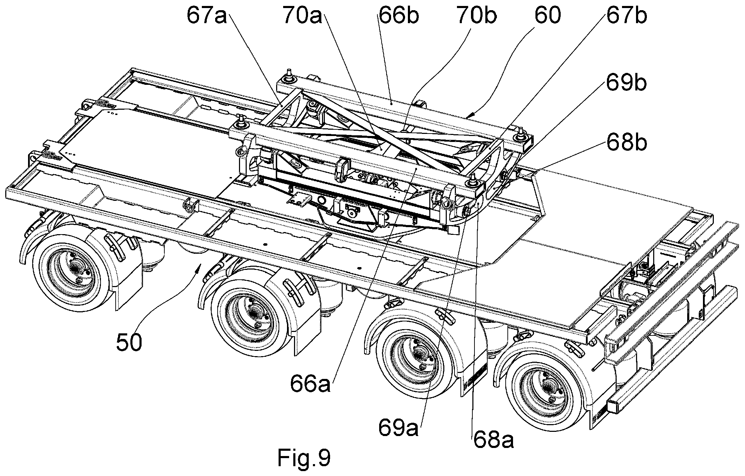

Das in Figur 1 dargestellte, den hinteren Bereich des zu transportierenden länglichen Objekts O tragende Fahrzeug 50, das hier als ein nachlaufender Anhänger ausgebildet ist, ist nun in den Figuren 8 und 9 dargestellt. Die Figur 8 zeigt das Fahrzeug 50 zusammen mit dem länglichen Objekt O, welches in einem an und für sich bekannten Klemmadapter 51 gehalten ist. Auf einem ebenfalls an und für sich bekannten und daher nicht mehr näher beschriebenen Chassis 52 des Anhängers 50 ist drehbar eine Lastauflage 60 angeordnet, welches ihrerseits den Klemmadapter 51 für das längliche Objekt O trägt.

Aus Gründen einer übersichtlicheren Darstellung ist in der Figur 9 das längliche Objekt O sowie das dieses längliche Objekt O auf dem Anhänger 50 haltende Klemmadapter 51 nicht gezeigt. Ein derartiger Aufbau ist bekannt und muss daher nicht mehr näher beschrieben werden.

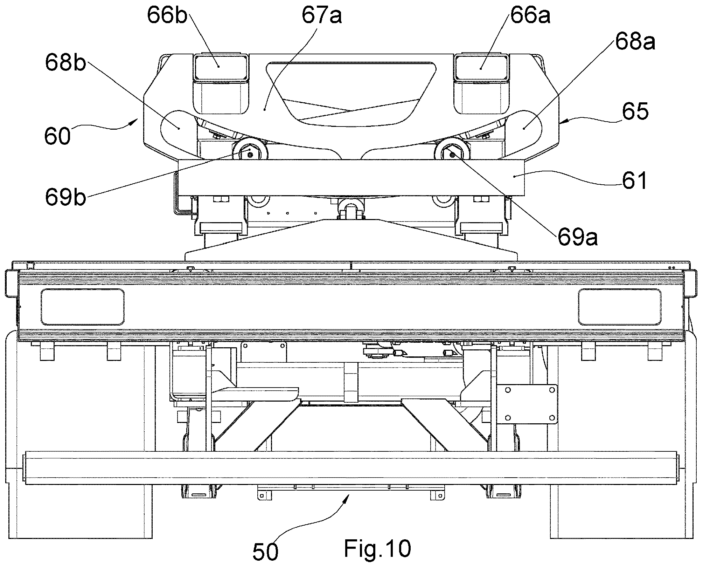

Die Figuren 10 bis 12 zeigen nun eine Lastauflage 60, welche in vorteilhafter Art und Weise eine Kompensation oder zumindest eine Verringerung von beim Transport auf das längliche Objekt O einwirkenden Torsionskräften und/oder Torsionsmomente ermöglicht: Durchfährt z. B. die mit dem Zugfahrzeug 2 gekoppelte Vorrichtung 10 eine Kurve mit einer zum Anhänger 50 geneigten Fahrbahn treten zwangsläufig Drehbewegungen um die Längsachse der Ladung auf, welche sich bei einer starren Einspannung der Ladung auf dem Anhänger 50 als Torsionsmomente bemerkbar machen. Der Klemmadapter 51 ist bei den bekannten Fahrzeugen ebenfalls unbeweglich mit der Lastauflage 60 verbunden, so dass das längliche Objekt O in diesem Bereich ebenfalls keine Ausgleichsbewegung durchführen kann, mit der Folge, dass die Struktur beim Transport des länglichen Objekts O dessen Struktur belastende Momente und Kräfte auftreten können.

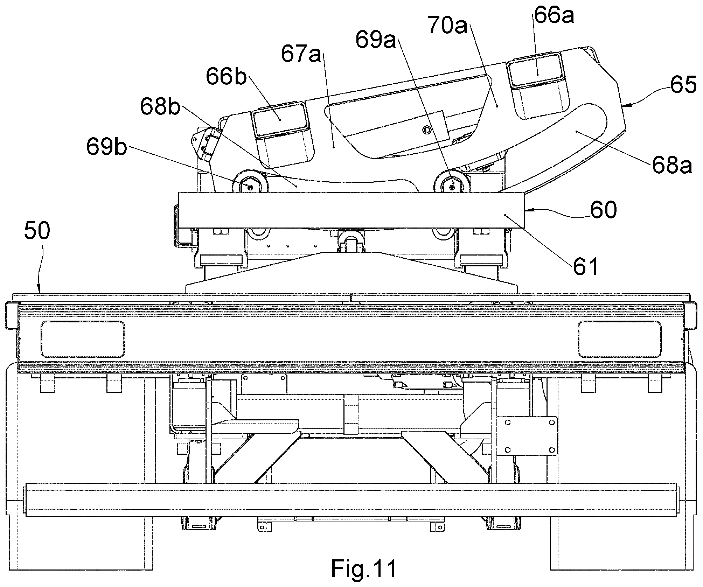

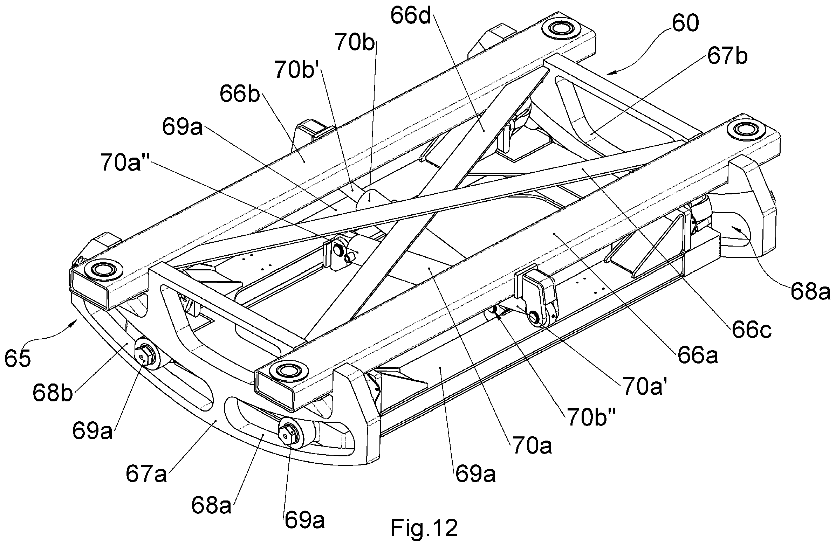

Die beschriebene Lastauflage 60 ist nun derart ausgebildet, dass derartigen Momenten und/oder Kräften in vorteilhafter Art und Weise entgegengewirkt oder diese zumindest reduziert, wenn nicht kompensiert werden können, indem die Lastauflage 60 eine Ausgleichsbewegung des länglichen Objekts O zulässt. Wie am besten aus den Figuren 10 und 11 ersichtlich ist, weist die Lastauflage 60 einen Unterbau 61 auf, der in der Regel um eine Hochachse drehbar auf dem Chassis 52 des Fahrzeugs 50 angeordnet ist. Wie aus den Figuren 10 und 11 ersichtlich ist, ist auf diesem Unterbau 61 ein relativ zu diesem schwenkbares Lastbett 65 angeordnet, dessen Ausgestaltung in Figur 12 dargestellt ist. Das vorzugsweise rahmenförmig ausgebildete Lastbett 65 weist zwei Lastträger 66a und 66b auf, welche durch quer verlaufende Träger 66c, 66d versteift sind, so dass durch die vorgenannten Bauelemente die eigentliche Lastauflage ausgebildet ist, auf weiche der Klemmadapter 51 angeordnet werden kann. An den Schmalseiten des Lastbettes 65 ist jeweils eine Führungskulisse 67a bzw. 67b angeordnet, welche Führungsschlitze 68a und 68b besitzen. In den Führungsschlitzen 68a, 68b der beiden Führungskulissen 67a ist ein Längsträger 69a und in den Führungskulissen 67b ein Längsträger 69b verschiebbar geführt. Wie aus den Figuren 10 und 11 ersichtlich, sind die beiden Längsträger 69a, 69b im Unterbau 61 der Lastauflage 60 angeordnet.

Durch die beschriebene Konstruktion kann also der Oberbau der Lastauflage 60, also das Lastbett 65, relativ zu deren Unterbau 61 eine vorzugsweise kreisförmige Schwenkbewegung durchführen. Dies bewirkt, dass das längliche Objekt O nun nicht mehr - wie bei den bekannten Fahrzeugen - starr in dem Fahrzeug 50 geklemmt ist, sondern es aufgrund der beweglichen Anordnung des Lastbetts 65 in Bezug auf den Unterbau 61 der Lastauflage 60 und somit in Bezug auf das Fahrzeug 50 eine Ausweichbewegung durchführen kann, sodass dem Auftreten von Torsionsmomenten und/oder -kräften, welche insbesondere beim Transport des länglichen Objekts O entstehen können, entgegengewirkt wird.

Es wird bevorzugt, dass die Lastauflage 60 derart ausgebildet ist, dass der Schwerpunkt des zu transportierenden länglichen Objekts O in der Nähe des Mittelpunkts der auf einer Kreisbahn verlaufenden Schwenkbewegung des Lastbettes 65 liegt. Dies hat zur Folge, dass auch bei einer Auslenkung des länglichen Objekts O, also bei einem Auslenken des Lastbettes 65 aus seiner Mittellage, der Gewichtsschwerpunkt des länglichen Objekts O nicht verändert wird, sodass keine zusätzliche Belastung auf die Lastauflage 60 und somit auf das Fahrzeug 50 auftritt.

Wie aus den Figuren 10 bis 12 des Weiteren ersichtlich ist, weist die Lastauflage 60 zwei Zylinder 70a und 70b auf. Ein erstes Ende 70a' des ersten Zylinders 70a ist mit dem Lastträger 66a und sein zweites Ende 70a" mit dem diesem Lastträger 66a schräg gegenüberliegenden Längsträger 69b verbunden. In entsprechender Art und Weise ist ein erstes Ende 70b' des zweiten Zylinders 70b mit dem zweiten Lastträger 66b und das zweite Ende 70b" des zweiten Zylinders 70b mit dem den Lastträger 66b schräg gegenüberliegenden Längsträger 69a verbunden. Die beiden Zylinder 70a und 70b sind durch einen geeigneten Hydraulikkreislauf miteinander verbunden. Beim Aufladen des länglichen Objekts O auf das Fahrzeug 50 ist es vorteilhaft, dass das Lastbett 65 keine Schwenkbewegung durchführen kann. Zu diesem Zweck wird der Hydraulikkreislauf gesperrt, sodass kein Hydraulikmedium zwischen den Zylindern 70a, 70b strömen kann. Hierdurch lässt sich das Lastbett 65 in einer definierten Position relativ zum Unterbau 61 der Lastauflage 60 unbeweglich festlegen. Im Fahrbetrieb, bei dem die vorstehend beschriebene Ausgleichsbewegung ermöglicht sein soll, werden dann der Hydraulikkreislauf und somit die beiden Zylinder 70a, 70b freigeschalten, sodass die durch die Sperre des Hydraulikkreislaufs bewirkte Festlegung des Lastbetts 65 aufgehoben ist. Die Zylinder 70a, 70b sind somit während des Transports frei von sie beaufschlagenden Kräften. Werden ein oder beide Zylinder 70a, 70b von dem unter Druck stehenden Hydraulikmedium entsprechend beaufschlagt, so ist eine aktive Bewegung des Lastbettes 60 möglich, es kann daher gezielt in eine entsprechende Position bewegt werden.

## Patentansprüche

1. Lastauflage für ein Schwerlast-Transportfahrzeug, welches ein auf einem Unterbau (61) der Lastauflage (60) angeordnetes Lastbett (65) zur Aufnahme eines länglichen Objekts (O) aufweist, **dadurch gekennzeichnet, dass** das Lastbett (65) schwenkbar im Unterbau (61) der Lastauflage (60) angeordnet ist, und dass das Lastbett (65) mindestens zwei in Längsrichtung der Lastauflage (60) verlaufenden Lastträger (66a, 66b) aufweist, dass an den Schmalseiten des Lastbettes (65) jeweils eine Führungskulisse (67a, 67b) angeordnet ist, welche Führungsschlitze (68a, 68b) besitzt, dass im Unterbau (61) der Lastauflage (60) Längsträger (69a, 69b) fest angeordnet sind, so dass das Lastbett (65) der Lastauflage (60) um die in den Führungskulissen (67a, 67b) geführten Längsträger (69a, 69b) relativ zu dem Unterbau (61) der Lastauflage (60) eine Schwenkbewegung durchführen kann.

2. Lastauflage nach Anspruch 1, **dadurch gekennzeichnet, dass** die Lastauflage (60) mindestens einen Zylinder (70a, 70b) aufweist, dessen erstes Ende (70a') mit einem ersten Lastträger (66a) und dessen zweites Ende (70a") mit einem diesen Lastträger gegenüberliegenden zweiten Längsträger (69b) verbunden ist.

3. Lastauflage nach einem der vorangehenden Ansprüche, **dadurch gekennzeichnet, dass** die Lastauflage (60) mindestens einen zweiten Zylinder (70b) aufweist, dessen erstes Ende (70b') mit einem zweiten Lastträger (66b) und dessen zweites Ende (70b") mit einem dem zweiten Lastträger (66b) gegenüberliegenden ersten Längsträger (69a) verbunden ist.

4. Lastauflage nach einem der vorangehenden Ansprüche, **dadurch gekennzeichnet, dass** auf dem Lastbett (65) der Lastauflage (60) ein Adapter (51) zur Halterung des länglichen Objekts (O) anordbar ist.

5. Schwerlast-Transportfahrzeug mit einer Lastauflage (60) zum Transport eines länglichen Objekts (O), **dadurch gekennzeichnet, dass** die Lastauflage (60) nach einem der Ansprüche 1 bis 4 ausgebildet ist.

6. Schwerlast-Transportfahrzeug nach Anspruch 5, **dadurch gekennzeichnet, dass** die Lastauflage (60) um eine Hochachse drehbar auf einem Chassis (52) des Schwerlast-Transportfahrzeugs (50) drehbar ist.

## Claims

1. Load support for a heavy-duty transport vehicle, which has a load bed (65) arranged on a substructure (61) of the load support (60) for receiving an elongated object (O), **characterized in that** the load bed (65) is arranged pivotably in the substructure (61) of the load support (60), and that the load bed (65) comprises at least two load carriers (66a, 66b) extending in the longitudinal direction of the load support (60), that on each narrow sides of the load bed (65) a guiding link (67a, 67b) is provided, which comprises guide slots (68b, 68b), that in the substructure (61) of the load support (60) longitudinal members (69a, 69b) are fixedly arranged, so that the load bed (65) of the load support (60) can pivot about the longitudinal members (69a, 69b) guided in the guiding links (67a, 67b) relative to the substructure (61) of the load support (60).

2. Load support according to claim 1, **characterized in that** the load support (60) comprises at least one cylinder (70a, 70b), whose first end (70a') is connected to said first load carrier (66a) and whose second end (70a") is connected to said second longitudinal member (69b) being arranged opposite to said load carrier (66a).

3. Load support according to one of the previous claims, **characterized in that** the load support (60) comprises at least one second cylinder (70b), whose first end (70b') is connected to said second load carrier (66b) and whose second end (70b") is connected to said first longitudinal member (69a) being arranged opposite to said second load carrier (66b).

4. Load support according to one of the previous claims, **characterized in that** on the load bed (65) of the load support (60) an adapter (51) for holding said elongated object (O) can be arranged.

5. Heavy-duty transport vehicle with a load support (60) for transporting an elongated object (O), **characterized in that** the load support (60) is designed according to one of the claims 1 to 4.

6. Heavy-duty transport vehicle according to claim 5, **characterized in that** the load support (60) is rotatable about a vertical axis on a chassis (52) of the heavy-duty transport vehicle (50).

## Revendications

1. Support de charge pour un véhicule de transport de charges lourdes, lequel présente un plateau de charge (65) disposé sur une sous-structure (61) du support de charge (60), destiné à recevoir un objet allongé (O), **caractérisé en ce que** le plateau de charge (65) est disposé de manière à pouvoir pivoter dans la sous-structure (61) du support de charge (60), et que le plateau de charge (65) présente au moins deux porte-charges (66a, 66b) s'étendant dans le sens longitudinal du support de charge (60), qu'est disposée sur les côtés étroits du plateau de charge (65) respectivement une coulisse de guidage (67a, 67b), laquelle possède des entailles de guidage (68a, 68b), que des longerons (69a, 69b) sont disposés de manière solidaire dans la sous-structure (61) du support de charge (60) de sorte que le plateau de charge (65) du support de charge (60) peut effectuer un mouvement de pivotement par rapport à la sous-structure (61) du support de charge (60) autour des longerons (69a, 69b) guidés dans les coulisses de guidage (67a, 67b).

2. Support de charge selon la revendication 1, **caractérisé en ce que** le support de charge (60) présente au moins un cylindre (70a, 70b), dont la première extrémité (70a') est reliée à un premier porte-charge (66a) et dont la seconde extrémité (70a*"*) est reliée à un second longeron (69b) faisant face audit porte-charge.

3. Support de charge selon l'une quelconque des revendications précédentes, **caractérisé en ce que** le support de charge (60) présente au moins un deuxième cylindre (70b), dont la première extrémité (70b') est reliée à un deuxième porte-charge (66b) et dont la seconde extrémité (70b*"*) est reliée à un premier longeron (69a) faisant face au deuxième porte-charge (66b) .

4. Support de charge selon l'une quelconque des revendications précédentes, **caractérisé en ce qu'**un adaptateur (51) destiné à maintenir l'objet allongé (O) peut être disposé sur le plateau de charge (65) du support de charge (60).

5. Véhicule de transport de charges lourdes avec un support de charge (60) pour transporter un objet allongé (O), **caractérisé en ce que** le support de charge (60) est réalisé selon l'une quelconque des revendications 1 à 4.

6. Véhicule de transport de charges lourdes selon la revendication 5, **caractérisé en ce que** le support de charge (60) peut tourner de manière rotative autour d'un axe vertical sur un châssis (52) du véhicule de transport de charges lourdes (50).
